# EUROPÄISCHE PATENTANMELDUNG

(11) **EP 0 690 544 A2**
(43) Veröffentlichungstag der Anmeldung: **03.01.1996**
(21) Anmeldenummer: 95109814.4
(22) Anmeldetag: 23.06.1995
(51) Int. Cl.: H02K 5/22

(54) **Kabel-Steckverbindung für den druckfest gekapselten Elektromotor einer Tauchmotorpumpe**

(30) Priorität: 01.07.1994 DE 4423069; 19.10.1994 DE 4437338
(71) Anmelder: KSB Aktiengesellschaft, D-67227 Frankenthal (DE)
(72) Erfinder: Ryborz, Walter, D-06126 Halle (DE); Zarth, Peter, D-67317 Altleiningen (DE); Bader, Manfred, D-06132 Halle (DE); Jansen, Rudolf, D-91257 Pegnitz (DE); Kochanowski, Wolfgang, D-55452 Windesheim (DE); Stein, Frank, D-06188 Landsberg (DE)

(57) **Zusammenfassung**

Zur Verwirklichung einer explosionsgeschützten, leicht herzustellenden Kabelverbindung für eine druckfest gekapselte Tauchmotorpumpe schlägt die Erfindung eine in zwei voneinander unabhängige Bereiche gegliederte Steckverbindung vor, die einerseits als druckfester Durchtritt durch die Gehäusewand und andererseits als für jede Ader der zu verbindenden Leitungen vorzunehmender Steckkontakt gestaltet sind.

## Beschreibung

Bisher ist es üblich, die Kraftleitungen für die Stromversorgung des Elektromotors und die Steuerleitung für die Überwachungseinrichtungen in Tauchmotorpumpen in explosionsgeschützter Ausführung mittels einer längsflüssigkeitsdichten Leitungsdurchführung in das Gehäuse des Tauchpumpen-Aggregates einzuführen. Der Anschluß im Aggregatinnenraum erfolgt über Quetschverbindungen und/oder Klemmen bzw. an einem Klemmbrett. Aufgrund der oftmals großen Kabelquerschnitte und -längen kann sich dabei ein für den weiteren Fertigungsdurchlauf und den Versand schwer handhabbares Aggregat ergeben. Zusätzlich zu dem gesteigerten Behandlungs- und Versandaufwand besteht noch das Risiko von Beschädigungen und Verunreinigungen auf dem Transport zum Kunden.

Der sich hier anbietende Lösungsweg, das Kabel bzw. dessen Kraftleitungen und Steuerleitung mit einem Stecker zu versehen, der mit einer in der Wand des Aggregatgehäuses angeordneten Steckdose zu verbinden ist, ist bei einer Tauchmotorpumpe allenfalls mit einem hohen technischen Aufwand gangbar. Die für einen reibungslosen, sicheren Betrieb des Tauchpumpenaggregates gültigen Bedingungen sowie die einschlägigen Vorschriften für den Explosionsschutz haben unterschiedliche, teilweise in Konkurrenz zueinander stehende Forderungen zur Art der Leitungsverbindungen und zur Drucksicherheit des Gehäuses zur Folge, die mittels eines Steckkontaktes der bekannten Art nicht zu erfüllen wären. So wird beispielsweise zur Sicherheit gegen einen elektrischen Überschlag in einer nicht vollständig isolierenden Umgebung, z. B. in Luft, zwischen den abisolierten oder mit einem elektrisch leitenden Material umhüllten Adern des Kabels ein Mindestabstand zwischen den Adern vorgeschrieben, der bei einem mehradrigen Kabel bereits zwangsläufig zu einem großen Durchmesser für Stecker und Steckdose führen würde. Dies hätte neben einem erhöhten Aufwand wiederum zur Folge, daß ein größerer Wanddurchbruch in dem druckfest gekapselten Gehäuse entstände, wobei das in der Wand angeordnete Verbindungselement und dessen Gehäuse nicht nur vergleichsweise groß, sondern wegen der Forderung nach Erfüllung der druckfesten Kapselung vergleichsweise aufwendig würde.

Der Erfindung liegt die Aufgabe zugrunde, eine Kabelverbindung für Tauchmotorpumpen zu schaffen, die unabhängig von der Tauchmotorpumpe zu transportieren und erst an deren Einsatzort auch von technisch gering qualifiziertem Personal problemlos und mit geringem Aufwand zu installieren ist, wobei die Bedingungen der elektrischen Sicherheit und des Explosionsschutzes zu erfüllen sind.

Die gestellte Aufgabe wird gelöst durch eine explosionsgeschützte Steckverbindung, bestehend aus einem dicht und lösbar mit dem Gehäuse des Elektromotors verbindbaren, mit einem rohrförmigen Innenteil versehenen Flansch, in dessen Innenteil einerseits das Kabel mit seiner Ummantelung zugentlastet befestigt ist und in dem andererseits die von der Ummantelung befreiten Adern mit Abstand zueinander in einer den verbliebenen Hohlraum ausfüllenden Vergußmasse eingebettet sind, wobei die längsflüssigkeitsdicht versiegelten, über den Innenteil des Flansches hinausreichenden Adern an ihren Enden mit Steckern versehen sind, welche lösbar mit entsprechenden Gegenstücken des Elektromotors verbindbar sind, wobei jede einzelne dieser Verbindungen eine einen elektrischen Kontakt mit den anderen Verbindungen verhindernde Umhüllung besitzt.

In vorteilhafter Ausgestaltung des Anspruches 1 wird eine Steckverbindung vorgeschlagen, bei der die an den Enden der Adern angeordneten Stecker mit die Aderisolationen einbeziehenden Umhüllungen versehen sind, welche die Adern längsflüssigkeitsdicht versiegeln.

Eine weitere Ausgestaltung der Erfindung sieht vor, daß die an den Enden der Adern angeordneten Stecker jeweils mit einer Arretierung gegen unbeabsichtigtes Lösen versehen sind.

Eine solche Arretierung kann beispielsweise durch eine federbeaufschlagte Zunge erreicht werden, die bei der Herstellung der Steckverbindung selbsttätig in eine ihr entsprechende Ausnehmung im anderen Steckerteil eingreift und die nur durch willentliche Betätigung wieder zu lösen ist.

Schließlich wird im Anspruch 4 noch eine Ausgestaltung der erfindungsgemäßen Steckverbindung vorgeschlagen, mit deren Hilfe Fehlschaltungen, z. B. zwischen Erde und Phase, bei der Herstellung der Steckverbindung automatisch vermieden werden. Die Ansprüche 5 bis 8 zeigen verschiedene Alternativen hierzu auf.

Die Erfindung erfüllt die an die Sicherheit der Gehäusedurchführung und der Kabelverbindung gestellten Forderungen gleichermaßen. Überdies ermöglicht sie eine schnelle Steckverbindung eines mit mehreren Kraftleitungen und einer Steuerleitung ausgestatteten Kabels mit den Leitungen des Tauchpumpenmotors am Einsatzort des Aggregates, was bedeutet, daß die Tauchmotorpumpe und das Kabel auf getrennten Wegen hergestellt und versendet werden können, daß aber auch eine problemlose Austauschbarkeit von Kabeln im Revisionsfall besteht. Zu erwähnen ist noch, daß die erfindungsgemäße Steckverbindung wegen des geringen Aufwandes und Raumbedarfs mit geringer Anpassungsarbeit auch bei bereits in einem Fertigungsprogramm befindlichen Tauchmotorpumpen eingesetzt werden kann.

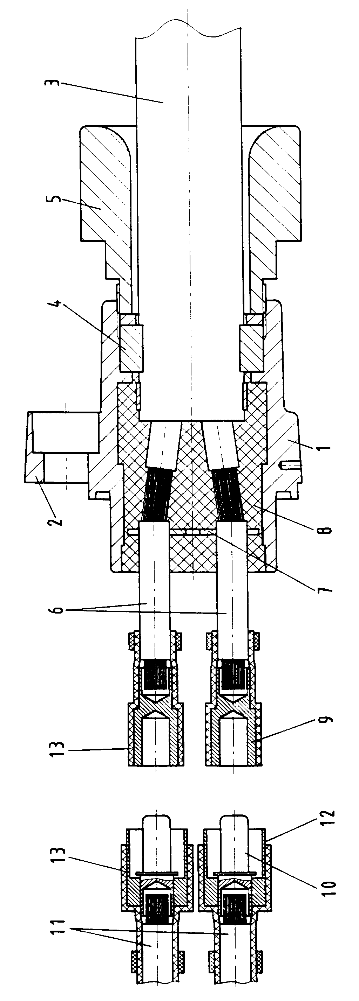

Anhand eines Ausführungsbeispiels wird die Erfindung näher erläutert. Die Zeichnung zeigt eine teilweise geschnitten dargestellte Steckverbindung, die gemäß der Erfindung gestaltet ist.

Zentrales Teil der Kabel-Steckverbindung ist ein mit einem rohrförmigen Innenteil 1 ausgestatteter Flansch 2. Durch den Innenteil 1 ist ein Kabel 3 geführt, welches mit Hilfe eines Klemmteiles 4 und einer dieses beaufschlagenden Druckschraube 5 zugentlastet innerhalb des Innenteiles 1 befestigt ist. Von den aus dem Kabel 3 austretenden vier Adern 6 sind hier nur zwei dargestellt. Die über eine Abstandscheibe 7 geführten Adern 6 sind in einer den verbleibenden Hohlraum des Innenteiles 1 ausfüllenden Vergußmasse 8 eingebettet. Die Enden der Adern 6 sind jeweils mit der Buchse 9 eines Steckkontaktes ausgerüstet. Der dazugehörige Stift 10 des Steckkontaktes befindet sich jeweils an einer Ader 11 der Kraft- und Steuerleitungen eines nicht dargestellten Elektromotors einer Tauchmotorpumpe.

Die Stifte 10 sind von Kunststoffbuchsen 12 umschlossen, die bei hergestellter Steckkontakt-Verbindung auch die Buchsen 9 umschließen. Die Buchsen 9, die Kunststoffbuchsen 12 und die diesen benachbarten Enden der Adern 6 und 11 sind jeweils mit einem Schrumpfschlauch 13 umhüllt. Durch einen innerhalb des Schrumpfschlauches 13 befindlichen Schmelzkleber wird Längsflüssigkeitsdichtheit für die Adern 6 und 11 hergestellt.

Die Länge der Adern 11 ist so bemessen, daß die Stifte 10 des Steckkontaktes aus dem Motorgehäuse nach außen geführt und dort arretiert werden können. Hierdurch wird eine nachträgliche Montage des Kabels 3 bzw. die Herstellung der Steckverbindung möglich, ohne daß das Motorgehäuse geöffnet werden muß.

## Patentansprüche

1. Über eine druckfest gekapselte Wand eines als Antrieb einer Tauchmotorpumpe dienenden Elektromotors geführte explosionsgeschützte Steckverbindung für ein mehradriges Kabel (3), bestehend aus einem dicht und lösbar mit dem Gehäuse des Elektromotors verbindbaren, mit einem rohrförmigen Innenteil (1) versehenen Flansch (2), in dessen Innenteil (1) einerseits das Kabel (3) mit seiner Ummantelung zugentlastet befestigt ist und in dem andererseits die von der Ummantelung befreiten Adern (6) mit Abstand zueinander in einer den verbliebenen Hohlraum ausfüllenden Vergußmasse (8) eingebettet sind, wobei die längsflüssigkeitsdicht versiegelten, über den Innenteil (1) des Flansches (2) hinausreichenden Adern (6) an ihren Enden mit Steckern (9) versehen sind, welche lösbar mit entsprechenden Gegenstücken (10) des Elektromotors verbindbar sind, wobei jede einzelne dieser Verbindungen eine einen elektrischen Kontakt mit den anderen Verbindungen verhindernde Umhüllung (12, 13) besitzt.

2. Steckverbindung nach Anspruch 1, bei der die an den Enden der Adern (6, 11) angeordneten Stecker (9, 10) mit die Aderisolationen einbeziehenden Umhüllungen (13) versehen sind, welche die Adern (6, 11) längsflüssigkeitsdicht versiegeln.

3. Steckverbindung nach Anspruch 1, bei der die an den Enden der Adern (6, 11) angeordneten Stecker (9, 10) jeweils mit einer Arretierung gegen unbeabsichtigtes Lösen versehen sind.

4. Steckverbindung nach Anspruch 1, bei der die an den Enden der Adern (6, 11) angeordneten Stecker (9, 10) und/oder diesen zugeordnete Teile so gestaltet sind, daß jeweils nur die zu einer Paarung gehörenden Stecker (9, 10) miteinander verbindbar sind.

5. Steckverbindung nach Anspruch 4, bei der die zu einer Paarung gehörenden Stecker (9, 10) in ihrer Querschnittsform und/oder -größe aneinander angepaßt sind.

6. Steckverbindung nach den Ansprüchen 3 und 4, bei der die gegen unbeabsichtigtes Lösen vorgesehenen Arretierungen derart gestaltet und/oder angeordnet sind, daß sie Fehlverbindungen verhindern.

7. Steckverbindung nach Anspruch 4, bei der die Stecker (9, 10) umschließende Buchsen (12) in ihrer Form und/oder Länge so gestaltet sind, daß sie Fehlverbindungen verhindern.

8. Steckverbindung nach Anspruch 4, bei der die Stecker (9) des in das Gehäuse des Elektromotors geführten Kabels (3) einerseits und die entsprechenden Gegenstücke (10) des Elektromotors andererseits jeweils gemeinsam auf einem sie tragenden und positionierenden Teil angeordnet sind, wobei die beiden Teile so gestaltet sind, daß Fehlverbindungen verhindert werden.
